Europäisches Patentamt

European Patent Office

Office européen des brevets

(11) Publication number: **0 117 281**
**B1**

(12) **EUROPEAN PATENT SPECIFICATION**

(45) Date of publication of patent specification: **26.07.89**

(51) Int. Cl.⁴: **G 06 F 15/40**

(21) Application number: **83109951.0**

(22) Date of filing: **05.10.83**

(54) Updating data processing files.

(30) Priority: **03.12.82 US 446732**

(43) Date of publication of application:
**05.09.84 Bulletin 84/36**

(45) Publication of the grant of the patent:
**26.07.89 Bulletin 89/30**

(84) Designated Contracting States:
**DE FR GB**

(56) References cited:
**US-A-4 204 206**

(73) Proprietor: **International Business Machines
Corporation
Old Orchard Road
Armonk, N.Y. 10504 (US)**

(72) Inventor: **Swank, Edgar William
5515 Spinnaker Drive, No. 4
San Jose California 95123 (US)**

(74) Representative: **Appleton, John Edward
IBM United Kingdom Limited Intellectual
Property Department Hursley Park
Winchester Hampshire SO21 2JN (GB)**

Courier Press, Leamington Spa, England.

**EP 0 117 281 B1**

**Description**

Background of the invention
Field of the invention

This invention in its preferred form relates to a new computing apparatus and method for updating files and for communicating updated files between a host processor and an intelligent computer in a distributed computing system.

Description of the prior art

There exists a need for transfer of large, changed text and other files within a distributed system limited by slow teleprocessing links interconnecting a host computer and an intelligent terminal, such as a personal computer with limited storage capacity.

A number of approaches are known to the art for updating files at a host from a remote terminal. For example:

U.S. Patent 4204206 describes a video display system. It relates to a host/terminal combination where the terminal has storage capability and performs editing on data downloaded from a host computer. The text in different areas of the display screen may be scrolled and edited independently of each other. Data from the display is transmitted one line at a time, during scrolling, to the host.

The IBM 3270 Manual, IBM Form No. C27 6999, at page 30, describes the READ MODIFIED command. The 3270 READ MODIFIED sends to the computer only those fields that have been entered, deleted, or changed by the operator. The 3270 keeps track of such modifications and uses that information to select data to send to the computer. The 3270 READ MODIFIED function deals just with individual fields within a display, and not with an entire file. Each field includes a header, which is changed if the field is edited, and a sequence number. Depending on the increment between such sequence numbers, a practical limitation is placed on the number of fields which can be inserted into the file at a given location in the sequence.

There is, for example a need for a file update and communication protocol which is adaptable to relatively slow communication speeds and terminal storage constraints, which provides for the identification of changed lines within an entire file, and which does not require the use of sequence numbers or headers on the lines—thus permitting, for example, the insertion of large blocks of data lines within the body of the file (not limited by space within the series of sequence numbers).

Summary of the invention

According to the method of the invention as specified in claim 1, a base text file stored at a host computer is modified from an intelligent terminal through a communication link interconnecting the host and terminal. The text file is transmitted as a plurality of lines of text from the host to the terminal. At the terminal, a hash total is computed for each line in the text file, and the hash totals stored at the terminal in a separate hash file. The user next applies changes, including changes to lines, deletion of lines and insertion of lines, to transform the text file into a modified file. A hash total is computed for each line of text in the modified file, and compared with the hash totals in the hash file to identify changed, deleted, inserted, and unchanged lines in the modified file. Changed and inserted lines in the modified file are then communicated to the host, along with the control information specifying the number and location within the base text file of selected unchanged and deleted lines.

According to the apparatus of the invention as specified in claim 9, a computing system including a host processor and an intelligent terminal provides for modification of a base text file stored at the host processor. Means at the terminal including an editable text file are provided for making deletions, changes and insertions to a copy of the base text file received from the host. Means including an uneditable line hash file are also provided for identifying and sending to the host changed and inserted lines, and for sending to the host control information identifying unchanged and deleted lines.

Brief description of the drawings

Figure 1 is a block diagram illustrating a host processor in communication with an intelligent computer terminal.

Figure 2 is a diagram illustrating a typical file.

Figure 3 is a diagram illustrating the format for communication of a file from the host processor to the intelligent terminal.

Figure 4 is a diagram illustrating the format of a clear text file on a diskette at the terminal.

Figure 5 is a diagram illustrating the format of a hash file on a diskette at the terminal.

Figure 6 is a diagram illustrating the format for communication of an updated file from the intelligent terminal to the host processor.

Figure 7 is a diagram illustrating a typical updated file.

Description of the preferred embodiment

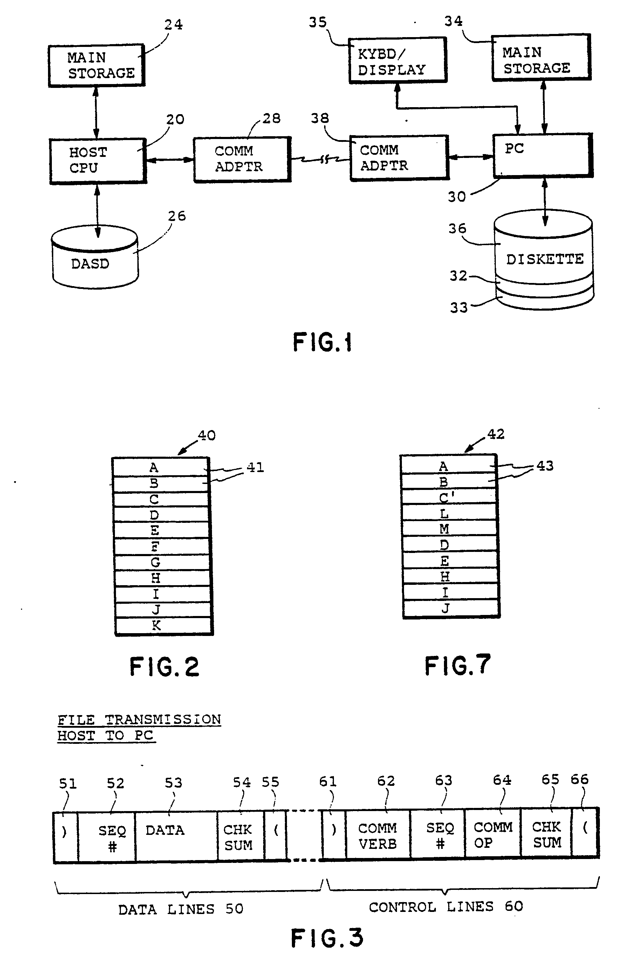

Referring to Figure 1, a host central processing unit (CPU) or processor 20 is in communication with an intelligent terminal, such as the IBM Personal Computer 30 with keyboard/display 35, main storage 34 and diskette storage device 36. Host processor 20 includes main storage 24 and a non-volatile storage device,

2

such as direct access storage device (DASD) 26 in which a base text file 40 (Figure 2) may be stored. A communication link, including communication adapter 28 at the host and communication adapter 38 at the terminal, interconnects processor 20 and computer 30.

In distributed data systems, data transfer between a terminal 30 and a host 20 is often limited by slow teleprocessing links 28, 38, and the capacity of storage devices 34 and 36 at terminal 30 is generally significantly smaller than the capacity of storage devices 24, 26 at host 20. This invention significantly improves such communication by transmitting only changed lines in an updated file from terminal 30 to host 20. As will be further described hereafter, when editing a text file, the entire file, together with a hash value calculated with respect to the entire file, is communicated from host 20 to terminal 30, there to be stored on diskette 36 at 33. A non-editable hash file is then created at the terminal containing a host-computed hash value for the entire file and a terminal-generated hash value for each line of the file; this file is stored at terminal 30 on diskette 36 at 32. After the terminal user at keyboard/display 35, or some other application program, has edited the original text file 33, hash values are calculated for each line of the edited file, and compared line by line with hash file 32 to identify the lines which have changed (new or modified). Only changed lines are returned to host 20, along with control information specifying the location in the original file, stored on DASD 26 and brought into main storage 24 for updating, of lines to be deleted or retained. To ensure integrity of this process, the original file at host 20 is only updated after the hash value for the original entire file has been recomputed by host 20 and it matches the entire file hash total previously stored at terminal 30, thus ensuring that the original file at host 20 has not been changed since the terminal hash file 32 was generated. After the file at host 20 is updated, the terminal hash file 32 is rewritten to reflect the update. The hash values for each line are generated at terminal 30 from the updated editable terminal text file 33; and the hash value for the new entire file is recomputed by host 20 and sent to terminal 30.

The procedure of the invention are implemented in application programs executed at host 20 and terminal 30. The host 20 application programs are designated as host transmit (HXMT) and host receive (HRCV) and described hereinafter by procedure specifications, with IBM System/370 assembly code provided for the file check sum (or hash) procedure. The terminal 30 application program, referred to as the emulator, is similarly described by procedure specifications, with a psuedo-code description of the associative compare procedure set forth in Tables 6—8 and Intel 8088 assembly code provided for the line check sum procedures in Tables 3—5 and for stack operations in Tables 10—19, as will be described more fully hereafter.

Referring now to Figure 2, a typical file 40 at host 20 includes a plurality of variable or fixed or undefined length records 41, each record 41 representing one line in file 40. As shown, the data in each record 40 is designated by a letter A, . . ., K. A copy of this file is communicated to terminal 30 and stored on diskette 36 in text file 33 for editing.

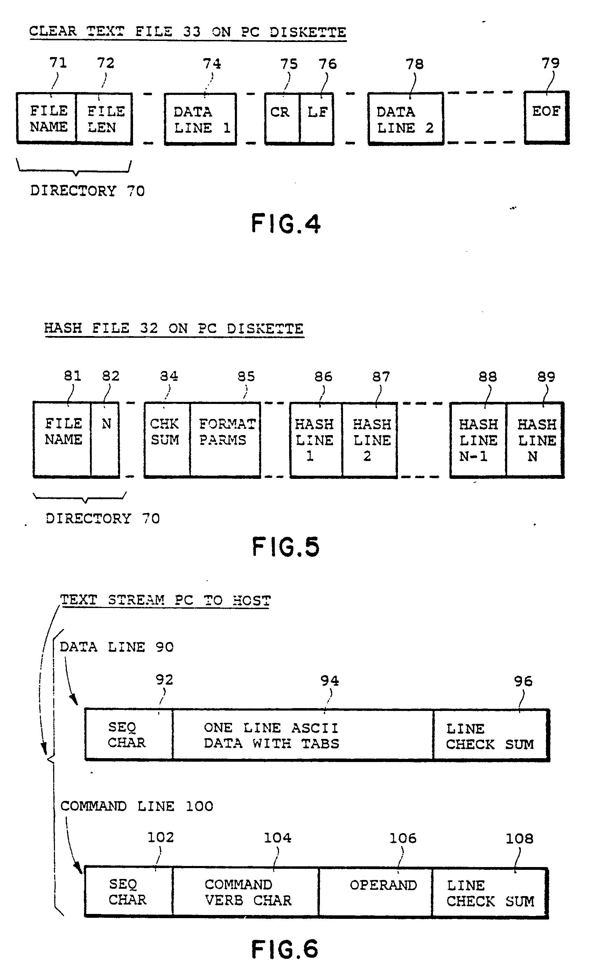

Referring now to Figures 3 and 6, the method for transfer of data to be edited from host system 20 to PC diskette 36, and return of edited data to host 20 from PC 30, will be described. In accordance with the preferred embodiment herein described, the PC 30 part of this action is invoked, such as by a user at keyboard 35, by issuing an emulator command. Emulator commands are commands which are executed by the application program (or emulator) in PC 30.

By way of illustration, the following description is provided of the user/emulator interface. An emulator command is entered by keying "%%" at keyboard/display 35. The emulator responds by displaying =], thus alerting the user that he is now commanding the emulator rather than host 28 and confirming that the "%%" was recognized. After =] appears, the user keys in a two-character command verb. If the verb is recognized, the emulator responds with a space. The user then enters a command operand and return. No part of the emulator command is sent to host 20. The emulator commands are set forth in Table 1, together with a summary description.

TABLE 1

Summary of emulator commands

| %%=]RF dev:fname.ext | Receive File |
|---|---|
| %%=]TF dev:fname.ext | Transmit Complete File |
| %%=]RC dev:fname.ext | Receive File for Transmit Changes |
| %%=]TC dev:fname.ext | Transmit File Changes |
| %%=]RB dev:fname.ext | Receive Binary File |
| %%=]TB dev:fname.ext | Transmit Binary File |

All of the emulator commands of Table 1 are used in file transfer and will be described hereafter. In the embodiment being described, the command operand "dev:fname.ext" names a text file 33 on diskette 36 according to IBM Personal Computer Disk Operating System (PC DOS) file naming conventions.

In the embodiment being described, editable files at host 20 are stored on DASD 26 or in main storage 24 in fixed, variable, or undefined-length records of eight-bit EBCDIC characters. On diskette 36 at PC 30, file data 32 is stored in strings of ASCII characters separated into records by ASCII carriage return and line feed (CRLF) characters. Thus, only data which can be translated uniquely into ASCII characters can be sent or

EP 0 117 281 B1

received from host 20. Host 20 may, in this preferred embodiment, comprise an IBM System/370 in which most source modules do not contain TAB characters, but fields within statements are aligned into columns by padding with blanks. The host 20 file transmit application HXMT of this embodiment of the invention has the ability to substitute TABs for strings of blanks. Conversely, the data receive application HRCV at host 20 can substitute blanks for tabs. Some host files, e.g., SCRIPT source, may contain tab characters. In these cases, it is possible to prevent any translation of blanks and tabs in both direction of data transfer. Many host files contain eight-digit sequence numbers at the front of variable length records or at the end of fixed length records. The data transmit application (HXMT) eliminates these on request from the terminal. Conversely, the data receive application (HRCV) can renumber records received at host 20 from terminal 30. The protocol for processing tabs, line sequence numbers, and other similar parameters, will be described hereafter.

The purpose in not sending blanks and sequence numbers is to shorten the time to transmit a file and to occupy less diskette 36 and main storage 34 space at PC 30 during stand-alone editing. A typical stand-alone editor allows variable tab positions and treats sequence numbers, if present, the same as other data. It does not, for example, generate new sequence numbers for inserted lines.

In accordance with the invention, in order to update from PC 30 a file residing at host 20, the complete file is first transmitted from host 20 according to the format set forth in Figure 3. The file transmitted from the host is stored at PC 30, as an editable ASCII file 33 on diskette 36 in the format set forth in Figure 4. Terminal 30 prepares therefrom an uneditable hash file 32 containing a hash total for each line in editable file 33 and stores it on diskette 36 in the format set forth in Figure 5. ASCII file 33 may then be modified with a stand-alone screen editor or some other means. The host file may then be updated by sending from the terminal a data stream of changed lines 90 and control information 100 according to the format of Figure 6, rather than the entire updated file 33. The data stream from the terminal is generated by comparing the modified ASCII file 33 with the file 32 of line hash totals, as will be described hereafter in connection with Tables 6—19. After the host file 24, 26 has been updated, the file of line hash totals 32 is regenerated to match the updated ASCII file 33, which now matches the host base file 24, 26. These various file and communication message formats will be more specifically described hereafter.

The compare done in PC 30 is an associative compare which does not use sequence numbering of either the base or updated file 33. The data stream sent to the host to update the base file is based on line counts, rather than sequence numbers. To ensure the integrity of the host file and of its update process, a file checksum 84 is computed at host 20, sent to PC 30, and stored with the line hash totals. Whenever a user requests to update the base file at host 20, the file checksum for the original base file is recomputed by host 20 and compared to the total previously sent to the terminal. Only if the two checksums match is the update allowed to proceed at the host. This procedure also prevents an inadvertant update at host 20 of the wrong file caused by a mismatch of host and terminal file names.

Referring now to Figure 3 in connection with Figure 1, a description will be given of the procedure for transmitting a file to the terminal from host 20 for update. In this embodiment of the invention, the following steps may be followed by the user at PC (or terminal) 30 to initiate and control this process:

1. Establish a normal terminal session with host 20 (which may be operating, for example, under control of an IBM MVS/TSO or VM/CMS operating systems), and enter a CLIST/EXEC:

```
XMITH dsname          (TSO), or
XMITH file type       (CMS)
```

Where "dsname" is a host data set for MVS, and "file type" is an existing file on the default CMS mini-disk. This involves the host transmit application HXMT.

2. Depending on how the CLIST/EXEC is set up, formatting commands for assumed tab positions and other formatting parameters may be read from the terminal or from another file. In update mode, for the embodiment being described, these parameters are stored on the terminal diskette 36 for use when the host file is updated.

3. When the host 20 program HXMT signals the user at keyboard/display 35 that it is ready to send, the user enters the emulator command:

```
%%=]RC dev:fname.ext
```

where "dev:fname.ext" is the name of a terminal 30 file 33 to be created or replaced on a diskette 36. The RC command will also cause the emulator to create or replace a file "dev:fname.HSH" 32 which contains the file 33 contents in a compressed hash form, as will be explained hereafter in connection with Tables 3—5.

4. When the emulator command is accepted, the host application HXMT sends the data from the host file 24, 26, line by line, to terminal 30 according to the format of Figure 3. After the terminal 30 has received each line and completed any necessary disk I/O, it sends an acknowledgement to host 20. When the host receives the acknowledgement, it sends the next line of data, and so on.

Thus, in host 20 to terminal 30 file transfers, the terminal initiates the transfer by sending a command word, such as "%A", to host 20. Each data line 50 from host 20 in response thereto includes a recognition

4

character ")" 51, a sequence letter 52, a line of data 53, a check sum 54, and a trailer character "(" 55. Herein, sequence letter 52 is an even modulo ten data sequence letter selected for each data line in sequence from the set A, C, E, G, I, A, C, . . . Check sum 54 is a modulo ten checksum digit generated by the host transmit application HXMT by adding the EBCDIC characters in a line modulo 256 and taking the result modulo ten, translating it to an EBCDIC digit. The terminal verifies the checksum 54 by translating each incoming ASCII character back to EBCDIC and performing the same calculations. Following transmission of data lines 50, two command lines 60 are transmitted from the host: an end-of-file command and a file checksum/formatting command. A control line 60 includes recognition character ")" 61, command verb 62, sequence number 63 (an even modulo ten data sequence number selected in sequence from the set 2, 4, 6, 8, 0, 2, 4, . . .), command operand 64, checksum 65, and trailer "(" 66. In the file checksum/formatting command word 60, the command operands, or parameters are the same as for the "F" command described hereafter. These parameters 64 are written (overlayed) at the beginning of the "fname.HSH" terminal diskette 36 file 32 into an area (84, 85) reserved for them before the line hash totals (86 . . . 89). Thus, referring to Figure 5, a hash file 32 is identified in diskette 36 directory 70 by file name 81 and length 82, the hash file 32 itself including file check sum 84, format parameters 85, and a hash value 86 . . . 89 for each of n lines in file 33. And, referring to Figure 4, the clear text file 33 on diskette 36 is identified in directory 70 by file name 71 and file length 72, and includes a plurality of ASCII data lines 74, 78, . . . separated by line delimiter fields 75 and 76, with an end-of-file (EOF) field 79 at the end.

To update a host file 24, 26 from a terminal 30 file 33, the user/terminal performs the following procedure:

1. The user establishes a normal terminal session with host 20 (MVS/TSO or VM/CMS) and enters a CLIST/EXEC:

| | |
|---|---|
| RDH dsname | (TSO), or |
| . RDH file type | (CMS) |

where "dsname" or "file type" is an existing file previously transferred to terminal 30 with the RC command. The RDH command invokes the host 20 file receive application HRCV.

2. During update all format commands to HRCV are overriden by parameters used when the file was originally transmitted from the host.

3. When HRCV indicates that it is ready to receive, the user enters at keyboard/display 35 the emulator command:

$$\% \% = ]TC\ dev:fname.ext$$

where "dev:fname.ext" is the name of a terminal file 33 on a diskette 36 which has been updated with a stand-alone editor or other means. The same diskette 36 must also contain a "dev:fname.HSH" file 32 which reflects the unchanged host file (dsname or file type) to be updated.

· 4. After the emulator command is accepted and if the files "dev:fname.ext" and "dev:fname.HSH" are found, transmission to the host begins.

5. First the file checksum, tabs and options are sent to host 20 in a command line 100. The file checksum must match that generated for the current base file on the host or the TC command is abend by HRCV.

6. The terminal will send the change data from the terminal file 33, line by line 90, to the host application. The host 20 application HRCV sends an acknowledgement when it is ready to accept another line 90. When all changes have been sent to the host 20 and accepted by HRCV, the "dev:fname.HSH" file 32 is re-written to match the current file, including a new file checksum computed at the host 20 and sent by HRCV. The session then returns to interactive terminal mode.

Referring to Figure 6, each data line 90 from terminal 30 is prefixed by a one-character header 92. The header base is an even modulo ten record sequence number (0, 2, 4, 6, 8, 0, . . .), which the host application (HRCV) checks to ensure no missing records. If a data line 90 is preceded by a form feed on the terminal file 33, a one is added to header sequence number 92. This will cause a page skip to be recorded in file 24, 26 if it contains printer control characters.

Terminal to host control, or command, lines 100 are distinguished by a header field 102 comprising a sequence letter (A, C, E, . . ., I) in place of the digit used for the data line record sequence number 92. The letter used corresponds to the digit which would have been used for a data line sequence number, so the sequence checking is maintained for control lines interspersed with data lines. Control line 100 includes, also, command verb character 104 (described hereafter), operand 106, and line check sum 108 fields. The trailer, or line check sum field 96 or 108, is a modulo ten checksum digit. Herein, this is generated by translating each character to EBCDIC, adding it modulo 256, and taking the result modulo tend, translating it to an ASCII digit. HRCV does the inverse at host 20, for verification, except that data comes in already translated to EBCDIC by the host access method.

HRCV at host 20 acknowledges receipt of each line by sending a two-character string "%n" where "n" is the record sequence number 92 or character 102 (less one if the number or character was odd) of the last record 90, 100 successfully received with a good checksum 96, 108. Terminal 30 resends any record 90, 100 if it receives an acknowledgement other than expected.

The various command verbs 104, together with their associated operands 106, will next be described.

1) F file checksum/formatting parameters

This is the first line 100 sent by terminal 30 to host 20 in update mode. It tells host 20 application HRCV that an update mode transmission is in process, and requests HRCV to compute a file checksum for the base file in storage 24, 26 and to verify that the file checksum sent in operand field 106 matches it. Field 106 includes: (1) the file checksum; (2) the tab settings; (3) a no-sequence-numbers or renumber-with-sequence-numbers (NONUM/RENUM) switch having a value "Y" if NONUM was specified when the file was originally sent from the host, and "N" otherwise (on file update, "Y" forces RENUM mode); and (4) a NXTAB switch, which is "Y" if NXTAB was specified when the file was sent from the host, "N" otherwise.

When HRCV receives this command "F" at the beginning of transmission, it first makes a copy of the host base file 40 (Figure 2) from DASD 26 in a DATASAV file in DASD 26. This will be the base against which updates are applied back to the original host file to create at host 20 its copy of modified file 42 (Figure 7). At the same time it computes the file checksum. If the file checksums match, an acknowledgement of the "F" command is sent to the terminal 30 and file transfer proceeds. If the file checksums do not match, HRCV sends an abend command and terminates; the terminal issues an error message at display 35 and returns to interactive mode.

The "F" command is used again at the end of transmission in conjunction with the "S" command, described hereafter.

2) Cnnnnn

The Cnnnnn command causes HRCV to copy "nnnnn" records from the original host copy of base file 40 into the host copy of new file 42 being prepared at the host. These represent lines in base file 40 which are unchanged in the updated file 42.

3) Dnnnnn

The Dnnnnn command causes HRCV to skip "nnnnn" records in the original base file 40 copy at the host. These represent lines which are deleted in the updated file 42.

4) Data line

Any data lines received at the host are written to the output file 42 in storage 24, 26. These represent either insertions to or replacements of lines in base file 40.

5) S

The S command is sent after all data and update control lines have been sent from PC 30 to host 20. It requests HRCV to compute a new file checksum which it returns to terminal 30 in a specially formatted acknowledgement:

%nnnnnnnnnnns

where "nnnnnnnnnn" is the new file checksum and "s" is the line sequence number of the "S" command. Since this format does not contain a checksum digit, the new file checksum is verified by sending a second "F" command to host 20. If the checksums do not match, HRCV acknowledges with the previous line sequence and the terminal resends the "S" command.

6) E

The E command is the end-of-transmission command from terminal 30 to host 20. Host 20 application HRCV responds by closing its files and terminating. The terminal session returns to interactive mode.

Referring to Figure 7 in connection with Figure 2, the manner in which the above commands are used will be explained. As shown in Figure 7, a terminal text file 40 has been modified to form a new terminal text file 42 which includes lines having text A, B, D, E, H, I, and J from original file 40, has a modified line C', and inserted lines L and M. Lines F, G, and K have been deleted from file 40 during the preparation therefrom of modified file 42. By this invention, the modified, inserted, and deleted lines are identified (by a procedure to be described hereafter) and the sequence of commands set forth in Table 20 sent to the host for updating the host copy of the text file.

In the following description of Tables 2—19, the numbers in parentheses generally refer to source code line numbers which perform the steps being described.

Two hash totals are used in the file update procedure of the invention. These are set forth in Tables 2—5. The line hash total of Table 3—5, set forth in 8088 assembly language notation, is computed and stored at the PC 30 terminal for each ASCII line received from the host for update mode. By the procedure of Table 2, a line hash total for the entire file is computed at host 20. This is sent to terminal 30, and stored in field 84 of hash file 32. Each hash total algorithm has the following common elements:

1) The hash total starts at zero (157; 253).

2) Before each input character is added, the previous total is ring shifted left three bits, with bits shifted off the high-order end of the total reentered on the low-order end (186—188; 278—386). Thus, all bits of the hash total participitate more evenly in the total, and simple transposition of characters or lines will produce a different total.

3) The seven or eight-bit input character is added to the low-order end of the shifted previous total. If there is a carry (overflow), a one is added (190—194; 387—389).

4) The above process is repeated until end-of-line or end-of-file (167—168; 396—397).

The hash totals have the following unique attributes:

1) The terminal line hash total is a 32-bit (4 byte) value computed from the 7-bit ASCII characters in a line including the terminating LF character (154—170).

2) The host file has total is a 31-bit value (the sign bit is not included) computed from all the eight-bit EBCDIC characters, left-to-right, of all lines, front-to-back, of the host base file. All characters of each host line record participate, including (a) record descriptors for variable records, (b) trailing blanks in fixed records, and (c) sequence numbers (390).

## EP 0 117 281 B1

TABLE 2
Host file checksum procedure

```
250  ;
251  ;     SYSTEM/370 CODE TO READ FILE AND
252  ;     COMPUTE FILE CHECKSUM
253                 XC      FILEHSH,FILEHSH SET CHECKSUM TO ZERO
254  SNDLOOP1      GET     DATAIN, DATAINB GENERATE LINES 255—258
255 +SNDLOOP1      LA      1,DATAIN  LOAD PARAMETER REG 1
256 +              LA      0,DATAINBLOAD PARAMETER REG 0
257 +              L       15,48(0,1)  LOAD GET ROUTINE ADDR
258 +              BALR    14,15       LINK TO GET ROUTINE
259                IC      R3,SEQNO LAST SEQNO SENT
260                N       R3,=X'0000000E'
261                A       R3,=F'2'
262                C       R3,=F'10'
263                BL      *+6
264                SR      R3,R3
265                O       R3,=X'000000F0'
266                STC     R3,SEQNO NEXT SEQNO TO SEND
267                STC     R3,TERMOUTB+9
268                CLI     CHGSW,0  CHANGES MODE?
269                BE      FCKS100   NO
270                LA      R1,DATAINBINPUT  POINTER
271                LH      R3,DCBLRECLLENGTH OF INPUT BUFF
272                LTR     R3,R3       LENGTH OF DATA TO SCAN
273                BNP     FCKS100   EXIT IF ZERO
274                LA      R0,1
275                L       R15,FILEHSH
276                SR      R10,R10
277  FCKS050       IC      R10,0(R1)  INPUT CHAR
278                SLA     R15,1       RING SHIFT LEFT 31
                                       BITS 3 TIMES
379                BNO     *+8
380                A       R15,=F'1'
381                SLA     R15,1
382                BNO     *+8
383                A       R15,=F'1'
384                SLA     R15,1
385                BNO     *+8
386                A       R15,=F'1'
387                AR      R15,R10    ADD IN CHAR
388                BNO     *+12
389                A       R15,=F'1'
390                N       R15,=X'7FFFFFFF'
391                AR      R1,R0
392                BCT     R3,FCKS050
393                ST      R15,FILEHSH
394  FCKS100       EQU     *
395                LA      R2,DATAINBSAVE INPUT BUFFER ADDR
     .
     .
     .
396                B       SNDLOOP1TO GET NEXT LINE FROM FILE
     .
     .
     .
397  INEOF         EQU     *           DATA IN END-OF-FILE EXIT
```

TABLE 3
Terminal line hash procedures

```
;
;       HASH LINE FROM DI TO EOL INTO 4-BYTE FIELD
;       POINTED AT BY RCPTR
;
HSHLIN          LABEL NEAR
                PUSH    DI
                MOV     DI,RCPTR
                CALL    CLR4B       ;TABLE 4
                                    ;CLEAR 4 BYTES POINTED TO BY DI

                POP     DI
HSHL10:         MOV     AL,[DI]     ;MOVE NEXT CHAR OF INPUT TO AL
                PUSH    AX
                PUSH    DI
                MOV     DI,RCPTR
                CALL    CKS4B       ;TABLE 4
                POP     DI
                POP     AX
                INC     DI
                CMP     AL,LF       ;END OF LINE (LF=X'0A')
                JNZ     HSHL10
                RET
                PAGE
```

TABLE 4
Checksum procedures

```
;
;       ADD ACCUMULATOR AL TO 4-BYTE FIELD AT (DI)
;       AS A CHECKSUM.
;
CKS4B           LABEL NEAR
                PUSH    AX          ;AX=AL+AH
                CALL    RNGSLT      ;TABLE 5
                                    ;RING SHIFT LEFT
                                    ;BY ONE BIT THE 4 BYTE FIELD
                                    ;POINTED TO BY DI

                CALL    RNGSLT
                CALL    RNGSLT
                POP     AX
                CALL    ADD4B       ;TABLE 5
                                    ;ADD TO 4-BYTE RESULT
                JC      $+3         ;SAME AS JUMP BELOW
                RET                 ;RETURN IF NO FINAL CARRY
                MOV     AL,1
                JMP     ADD4B       ;ADD BACK ANY CARRY
                                    ;SAME AS CALL FOLLOWED BY RETURN
;
;       CLEAR 4-BYTE FIELD AT (DI)
;
CLR4B           LABEL NEAR
                XOR     AX,AX
                MOV     [DI],AX
                MOV     [DI+2],AX
                RET
```

# EP 0 117 281 B1

## TABLE 5
### Routines for associative compare

```
210  ;
210  ;    ROUTINES FOR ASSOCIATIVE COMPARE WITH
211  ;    CHECKSUMS
212  ;
213  ;    RING SHIFT LEFT 4-BYTE FIELD AT (DI)
214  ;
215  RNGSLT        LABEL NEAR
216                PUSH   AX
217                MOV    AX,[DI]
218                RCL    AX,1
219                RCL    WORD PTR[DI+2],1
220                RCL    WORD PTR[DI],1
221                POP    AX
222                RET
223  ;
224  ;    ADD AL TO 4-BYTE FIELD AT (DI)
225  ;
226  ADD4B         LABEL NEAR
227                PUSH   DI
228                PUSH   CX
229                MOV    CX,3
230                ADD    DI,CX
231                ADD    [DI],AL
232                JNC    ADD4BX
233  ADD4B2:       DEC    DI
234                INC    BYTE PTR[DI]
235                JNZ    ADD4BX
236                LOOP   ADD4B2
237                STC
238  ADD4BX:       POP    CX
239                POP    DI
240                RET
```

In Tables 6—19 is set forth the associative compare procedure executed in terminal 30 by the emulator of the invention. This compare procedure uses a stack (6, 13) in main storage 34 for each of the two input files 32, 33. In this implementation, each stack contains 1535 4-byte (32-bit) elements. The contents of the elements are the 32-bit line checksums (line hash totals) derived in Tables 3—5. These are read directly from the hash total base file 32 and are computed as each line is read from the updated ASCII text file 33 (in Figure 1; 42 in Figure 7). For the updated file 33, 42, there is another 1535-element array (B' auxiliary stack of lines 13; 119) which contains sector and relative byte addresses for the start of each line in the corresponding line checksum stack (13). When lines to be inserted or replaced are found, this parameter (which is a combination of sector and relative byte address) is used to retrieve (119) the line from the diskette file 33 to be sent to the host 20.

The associative compare procedure starts by reading (5, 13) one line from each of two input files. If the two lines have equal line checksums, they match, and synchronous mode (4) is entered. If the two lines do not match (19—20), then search mode is entered (41).

In synchronous mode, all lines read from one input file since entry to synchronous mode have matched (19, 20) corresponding lines from the other input file. The input stacks contain only the most recently read lines from each file (6A,9). Synchronous mode is terminated by encountering (a) two input lines which do not compare (20) or (b) end-of-file on either input file (11, 17). A count is kept of the lines compared since synchronous mode was entered (21). When synchronous mode terminates, this count is used to generate the Cnnnnn control command sent to host 20 (42).

Search mode is entered when two lines are encountered in synchronous mode which do not compare (41). In search mode, a line is read (44, 69) from each file which is compared against all lines in the stack for the other file (47, 72). Each stack contains the lines read from its file since search mode was entered (44, 69). This process continues until the last line read from one file matches (51, 75—76) some line in the stack of the previous file. The status of each stack is saved (52, 77), then each file is logically read (53—57, 78—82) from the compare point to determine how many consecutive lines match.

If only one consecutive line matches (101), the compare is ignored. This will result in one data line being sent to the host instead of a C00001 control command. This action also effectively increases the line hash totals to 64 bits.

10

If two to 15 consecutive lines match, the position of each line in its respective stack and the compare count is placed (61, 101) into a five-entry compare-fail stack, and search mode continues (64, 65).

If 16 consecutive lines compare equal, the compare-fail stack is searched (66, 106) for the entry with the smallest compare count which does not interfere with (that is, occurs in the stack before and does not overlap) any of a nest of entries with a larger compare count, all of which do not interfere with the 16 line entry. Interference is thus defined by the assembly code at lines 459—472 of Table 11. If an entry is found, the end of each stack is set to the positions of the entry (66, 106). If no entry is found, the end of each stack is set to the start of the 16-line compare.

If the base file stack is not empty (116), a delete (Dnnnnn) control command is generated and sent to the host (117). "nnnnn" is the count of entries in the base file stack. The ASCII lines corresponding to the entries in the updated file stack are retrieved from the diskette and sent to the host (118, 119). The stacks are cleared by moving the front-of-stack pointers to the end of the stacks (119A). Search mode is now terminated and synchronous mode resumed (122). Since the end-of-stack pointer for at least one of the stacks has been moved up (119A), a logical read for a record only updates the end-of-stack pointer until the last record actually read from the diskette is encountered (5, 13, . . ., 80, . . .).

In this embodiment, the compare-fail stack is a five-entry stack which is maintained in order sorted (61, 101) by decreasing compare count. Should more than five 2—15 line compares be encountered before a 16-line compare, the smallest entries are lost (62, 102). This results in the lines for these smallest entries being sent to the host even though they really didn't have to be. As would be apparent to those skilled in the art, the procedure of the tables could be modified to accommodate more entries in a larger stack.

If the 1535-entry stacks become full during search mode, a "compare table overflow & flush" occurs (109—111). The same procedure is followed as if a 16-line compare occurred at the overflow point. If this occurs, file integrity is maintained, by synchronous mode may not be reestablished. One-line compares are ignored and 2—15 line compares are stacked (61—62, 101—102) to avoid losing synchronization when a line is inserted which happens to match a line already in the file. This can occur frequently in programming languages: for example, in comments and commonly used in line routines.

## TABLE 6
### Associative compare main loop

```
001  ASCOMP:
002     PROCEDURE ASSOCIATIVE COMPARE
003     (MAIN COMPARE LOOP-SYNCHRONOUS MODE
           'A' FILE IS HASH FILE 32
           'B' FILE IS TEXT FILE 33)
004  CLOOP:
005     LOGICAL READ A 'RECORD (HASH TOTAL) FROM 'A' FILE
006     ADD HASH TOTAL TO 'A' STACK
006A    SET 'A' STACK TO CONTAIN ONLY LAST RECORD READ
007     IF END_OF_FILE THEN DO
008     . LOGICAL READ A RECORD FROM 'B' FILE
009     . SET 'B' STACK TO CONTAIN ONLY LAST RECORD READ
010     . MARK 'A' FILE EMPTY
011     . GOTO NC1
012     END
013     LOGICAL READ A RECORD FROM 'B' FILE. CONVERT
            RECORD TO HASH TOTAL AND ADD TO 'B' STACK.
            SAVE DISKETTE LOCATION IN 'B' AUXILIARY STACK.
014     SET 'B' STACK TO CONTAIN ONLY LAST RECORD READ
            (ALL PREVIOUS RECORDS HAVE COMPARED, AND
            COMPARE COUNT WILL BE INCREMENTED.
            COMPARE COUNT IS C VERB OPERAND)
015     IF END_OF_FILE THEN DO
016     . MARK 'B' FILE EMPTY
017     . GOTO NC1
018     END
019     COMPARE (HASH TOTALS) LAST RECORDS FROM
            'A' AND 'B' FILES
020     IF NOT EQUAL GOTO NC1
021     COMPARE_COUNT=COMPARE_COUNT+1
022     IS THIS FIRST COMPARE AFTER NON-COMPARE?
023     IF YES THEN DO
024     . RESET FIRST COMPARE SWITCH
025     . RESET COMPARE_COUNT TO 1
026     END
027     GOTO CLOOP
```

## TABLE 7
### Associative compare search mode I

```
040   (FIRST NON-COMPARE AFTER COMPARE—ENTER SEARCH MODE)
041   NC1:
042      IF THIS IS FIRST NON-COMPARE AFTER SYNCH MODE THEN
            SENT Cnnnnn (COMPARE_COUNT) TO HOST
043   CLOOP2:
044      LOGICAL READ A RECORD FROM 'A' FILE AND ADD TO 'A' STACK
045      IF END_OF_FILE THEN GOTO NOCAB
046      IF 'B' STACK EMPTY GOTO ENDCYC1
047      COMPARE LAST 'A' RECORD AGAINST ALL RECORDS IN 'B' STACK
048   SCBX1:
049      CONTINUE COMPARING 'A' RECORD AGAINST REMAINING 'B' RECORDS
050      STOP AT FIRST 1-LINE MATCH
051      IF NO MATCH FOUND THEN GOTO NOCAB
052      SAVE 'A' AND 'B' STACK AND LOGICAL FILE POINTERS
            ANCSHLD, BNCSHLD, PCFCNTA & PCFCNTB IN 'HOLD'
053      RESET 'B' STACK AND LOGICAL FILE POINTERS TO END
            AT COMPARE POINT
054         DO FOR M=1 TO 16
055         LOGICAL READ A NEXT RECORD FROM BOTH 'A' AND 'B' FILES
056         IF RECORDS ARE UNEQUAL THEN GOTO CLP210
057      END
058      GOTO CLP216
060   CLP210:
061      SAVE POINTERS FOR FAILED COMPARE ON
            COMPARE_FAIL_STACK (TABLE 10) SORTED BY SIZE
            (LINES 495—547)
062      IF COMPARE_FAIL_STACK FULL THEN DISCARD
            SHORTEST ENTRIES
```

## TABLE 8
### Associative compare search mode II

```
063   CLP216:
064      RESET 'A' AND 'B' STACK AND LOGICAL FILE POINTERS FROM 'HOLD'
065      IF 16-LINE COMPARE FAILED THEN GOTO SCBX1
066      RESET STACKS AND LOGICAL FILES TO SMALLEST ENTRY
            FROM COMPARE_FAIL_STACK WHICH DOES NOT
            INTERFERE WITH LONGER COMPARES IN STACK
            (SEE TABLE 11 LINES 450—494)
067      GOTO GENXO
068   NOCAB:
069      LOGICAL READ A RECORD FROM 'B' FILE AND ADD TO 'B' STACK
070      IF END_OF_FILE THEN GOTO ENDCYC1
071      IF 'A' STACK EMPTY THEN GOTO ENDCYC1
072      COMPARE LAST 'B' RECORD AGAINST ALL RECORDS IN 'A' STACK
073   SCBX2
074      CONTINUE COMPARING 'B' RECORD AGAINST REMAINING 'A' RECORDS
075      STOP AT FIRST 1-LINE MATCH
076      IF NO MATCH FOUND THEN GOTO ENDCYC1
077      SAVE 'A' AND 'B'' STACK POINTERS IN 'HOLD'
078      RESET 'A' STACK AND LOGICAL FILE POINTERS TO END
            AT COMPARE POINT
079      DO FOR M=1 TO 16
080      .  LOGICAL READ A RECORD FROM 'A' AND 'B' FILES
081      .  IF RECORDS ARE UNEQUAL THEN GOTO CLP310
082      END
083      GOTO CLP316
```

12

### TABLE 9
#### Associative compare subroutines

```
100   CLP310:
101     IF COMPARE GREATER THAN 1, SAVE POINTERS
            FOR FAILED COMPARE ON COMPARE_FAIL_STACK
            SORTED BY SIZE, ELSE GOTO SCBX2
102     IF STACK FULL THEN DISCARD SHORTEST ENTRIES
            (SEE TABLES 12 & 13, LINES 495—547)
103   CLP316:
104     RESET 'A' AND 'B' STACK POINTERS FROM 'HOLD'
105     IF 16-LINE COMPARE FAILED THEN GOTO SCBX2
106     RESET STACKS AND LOGICAL FILES TO SMALLEST ENTRY
            FROM FAILED COMPARE STACK WHICH DOES NOT
            INTERFERE WITH 16-LINE COMPARE (TABLE 11 LINES
            459—494)
107     GOTO GENXO
108   ENDCYC1:
109     IF EITHER 'A' or 'B' STACK IS FULL (1535 LINES)
            THEN DO
110     . WRITE COMPARE FLUSH MESSAGE AND SET SW
111     . GOTO GENXO (TO FLUSH BUFFERS EVEN THOUGH THERE WAS NO COMPARE)
112     END
113     IF END_OF_FILE ON BOTH 'A' AND 'B' FILES THEN
            GOTO CLSSET
114     ELSE GOTO CLOOP2
115   GENXO:
116     IF 'A' STACK NOT EMPTY THEN
117       SEND Dnnnnn FOR nnnnn RECORDS ON 'A' STACK
118     IF 'B' STACK NOT EMPTY THEN
119       RETRIEVE RECORDS ON 'B' STACK FROM DISKETTE
            USING STORED DISK LOCATION PARAMETERS AND
            SEND THEM TO HOST (IF SW=SET, THIS IS FLUSHING)
119A    SET STACKS TO START OF 16 LINE COMPARE
120     IF END_OF_FILE ON BOTH 'A' AND 'B' FILES THEN GOTO CLSSET
121     IF BUFFERS WERE FLUSHED GOTO CLOOP2
122     ELSE GOTO CLOOP
123   (END OF FILE ON BOTH 'A' AND 'B')
124   CLSSET:
125     IF 'A' AND 'B' WERE IN SYNCH AT CLOSE THEN
126       SEND Cnnnnn (COMPARE_COUNT) TO HOST
            (IN SYNCH: BOTH 'A' AND 'B' ARE EMPTY (EOF))
127     ELSE DO
128     . IF 'A' STACK NOT EMPTY THEN
129     . SEND Dnnnnn FOR nnnnn RECORDS ON 'A' STACK
130     . IF 'B' STACK NOT EMPTY THEN
131     .   SEND RECORDS ON 'B' STACK TO HOST
                (IN DATA LINES, FIG. 8)
132     END
133   END PROCEDURE ASCOMP
```

TABLE 10
Compare fail stack

```
400  ;
401  ;     NON-COMPARE (COMPARE-FAIL) STACK OFFSETS
402  ;
411  NCSMAP    EQU    0
412  NCSCCNT   EQU    0        ;2 CNT OF RECS (el M) WHICH COMPARED
413  NSCFP     EQU    2        ;2 FORWARD PTR
414  NCSBP     EQU    4        ;2 BACKWARD PTR
415  NCSACNT   EQU    6        ;2 CNT OF RECS PTR1-LAST NC REC A
416  NCSBCNT   EQU    8        ;2 CNT OF RECS PTR1-LAST NC REC B
417  NCSAPTR   EQU    10       ;2 APTR2 AT START OF THIS COMPARE
418  NCSBPTR   EQU    12       ;2 BPTR2 AT START OF THIS COMPRE
419  LNCSENT   EQU    16       ;LENGTH OF NCS ENTRY
420  LNCSAD    DW     G:NCS08
421  NCSR1     DW     0
422  NCSR2     DW     0
423  ;
424  ;     NON-COMPARE (COMPARE-FAIL) STACK
425  ;
426  NCSPTR    DW     0,G:NCS01,G:NCS08   ;POINTER TO STACK
427  NCS01     DW     0,G:NCS02,0000000,0,0,0,0,0
428  NCS02     DW     0,G:NCS03,G:NCS01,0,0,0,0,0
429  NCS03     DW     0,G:NCS04,G:NCS02,0,0,0,0,0
430  NCS04     DW     0,G:NCS05,G:NCS03,0,0,0,0,0
431  NCS05     DW     0,G:NCS06,G:NCS04,0,0,0,0,0
432  NCS06     DW     0,G:NCS07,G:NCS05,0,0,0,0,0
433  NCS07     DW     0,G:NCS08,G:NCS06,0,0,0,0,0
434  NCS08     DW     0,0000000,G:NCS07,0,0,0,0,0
```

TABLE 11
Process compare fail stack I

```
450 ;
451 ;      PROCESS STACK ENTRIES AFTER M COMPARE SUCCESS
452 ;
454 PCFSTK      LABEL NEAR
455 PCFLP10:    CALL      NCSRMF          ;REMOVE 1ST(LARGEST) ENTRY
456             MOV       AL,[DI]         ;NCSCCNT=# RECORDS COMPARING
457             CMP       AL,2            ;AT LEAST 2?
458             JC        PCFF20          ;NO. FREE & EXIT
                                          ;JUMP & CARRY. HAS SAME 8088
                                          ;OP CODE AS JNB/JAE (X'72')

459             PUSH      DI
460             MOV       SI,[DI+NCSACNT] ;DOES THIS COMPARE INTERFERE?
                                          ;# RECORDS IN A STACK AT
                                          ;POINT WHERE SOME PREVIOUS
                                          ;COMPARE LESS THAN 16 OCCURRED
461             MOV       DI,PCFCNTA      ;# ENTRIES IN A STACK WHEN 16
                                          ;LINE COMPARE OCCURRED
462             CMP       DI,SI
463             POP       DI
464             JC        PCFF10          ;YES, IT DOES INTERFERE
465             PUSH      DI
466             MOV       SI,[DI+NCSBCNT]
467             MOV       DI,PCFCNTB
468             CMP       DI,SI
469             POP       DI
470             JC        PCFF10          ;YES, IT DOES INTERFERE
471             PUSH      DI
472             ADD       DI, NCSACNT     ;NO. IT DOESN'T INTERFERE, SO
                                          ;REPLACE CURRENT ENTRY
473             MOV       SI,DI           ;LOCATION OF STACK ENTRY
474             CLD
475             MOV       DI,OFFSET G:PCFCNTA   ; MOVES TWO BYTES
476             MOVSW                           ;
477             MOV       DI,OFFSET G:PCFCNTB   ; POINTED TO BY
478             MOVSW                           ;
479             MOV       DI,OFFSET G:ANCSHLD   ; SI INTO AREA
480             MOVSW                           ;
481             MOV       DI,OFFSET G:BNCSHLD   ; POINTED AT BY DI
482             MOVSW                           ;
                                    ; PCFCNTA AND PCFCNTB CONTAIN COUNTS
                                    ; OF NUMBER OF RECORDS IN THE A AND
                                    ; B STACKS AT TIME THIS COMPARE
                                    ; STARTS. THE A STACK IS THE
                                    ; UNMODIFIED FILE CHECK SUM STACK
                                    ; AND THE B STACK STACKS MODIFIED
                                    ; FILE CHECK SUMS AND AN AUXILIARY
                                    ; STACK OF RECORD NUMBER POINTERS
                                    ; TO FULL FILE RECORDS
483             POP       DI
484 PCFF10:     CALL      NCSFRE
485             CALL NCSAD
486             JMP       PCFLP10
487 PCFF20      LABEL NEAR
488             CALL      NCSFRE
489             CALL      NCSAD
490             MOV       DI,ANCSHLD
491             CALL      RSAHL
492             MOV       DI,BNCSHLD
493             CALL      RSBHL
494             RET
```

TABLE 12
Process compare fail stack II

```
495  ;
496  ;     STORE STACK ENTRY FOR M COMPARE FAIL
497  ;
499  CFSTACK    LABEL  NEAR         ; CALLED WHEN ONE LINE COMPARES
                                    ; BUT SCAN AHEAD FINDS LESS THAN
                                    ; 16 LINES COMPARE
500             MOVE   CNSCMP,255        ;SET CONSEC COMP SW
501             MOVE   AX,M+1
502             SUB    AX,CX             ;COUNT OF COMPARING RECORDS
                                        ;CX IS RESIDUAL COUNT,
                                        ;COUNTING DOWN FROM 16
503             MOV    CX,AX
504             CMP    AL,2
505             JNC    $+3
                                    ; LINES 506—547 CREATE A STACK ENTRY.
                                    ; STACK IS SORTED BY NUMBER OF LINES
                                    ; THAT DID COMPARE BY CALLING NCSAD
506             RET                      ;DONT STACK. LESS THAN TWO
                                        ;COMPARING
507             MOV    DI,LNCSAD         ;LAST STACK ENTRY
508             MOV    AL,[DI]           ;COMPARE SPAN
509             SUB    AX,CX
510             JC     CFS100            ;ADD IF NEW COUNT NOT LESS
511             JZ     CFS100
512             NEG    AX
513             INC    AX
514             MOV    BX,[DI+NCSACNT]
515             MOV    DI,PCFCNTA
516             SUB    DI,BX
517             CMP    DI,AX
518             JNZ    CFS100
519             MOV    DI,LNCSAD         ;LAST STACK ENTRY
520             MOV    SI,[DI+NCSACNT]
519             MOV    DI,PCFCNTA
520             XCHG   DI,SI
521             SUB    DI,SI
522             CMP    DI,AX
523             JNZ    $+3
524             RET
```

TABLE 13
Process compare fail stack III (Table 12 continued)

```
CFS100     LABEL NEAR
           CALL     NCSRML           ;REMOVE LST REC FROM STACK
           MOV      AX,CX
           CMP      AL,[DI]
           JC       CFS800           ;ADD IF NEW COUNT GREATER
           JZ       CFS800
           PUSH     DI
           MOV      [DI],CL
           ADD      DI,NCSACNT
           CLD
           MOV      SI,OFFSET G:PCFCNTA
           MOVSW
           MOV      SI,OFFSET G:PCFCNTB
           MOVSW
           MOV      SI,OFFSET G:ANCSHLD
           MOVSW
           MOV      SI,OFFSET G:BNCSHLD
           MOVSW
           POP      DI
           MOV      LNCSAD,DI
CFS800     LABEL NEAR
           CALL     NCSAD            ;ADD TO STACK IN ORDER
CFS900:    RET
```

TABLE 14
Process compare fail stack IV

```
           ;
           ;    ADD STACK ENTRY POINTED TO BY DI TO ACTIVE STACK
           ;    ACTIVE STACK ENTRIES ARE SORTED BY DECREASING
           ;    COMPARE COUNT NCSCCNT
           ;
NCSAD      LABEL NEAR
           MOV      NCSR1,DI
NCSAD01:   MOV      DI,OFFSET G:NCSPTR
NCSADLP    LABEL NEAR
           MOV      NCSR2,DI
           MOV      SI,[DI+NCSBP]
           OR       SI,SI            ;SETS CONDITION REGISTERS
                                     ;TO ZERO
           JZ       NCSAD10          ;STARTR OF STACK, ADD AT START
           MOV      DI,NCSR1
           MOV      AL,[SI]          ;OLD REC NCSCCNT
           CMP      AL,[DI]          ;NEW REC
           JNC      NCSAD10          ;NEW REC LO OR EQUAL.
                                     ;ADD HERE
           MOV      DI,SI            ;CURRENT ENTRY=NEXT
           JMP      NCSADLP          ;CONTINUE LOOP
NCSAD10    LABEL NEAR
           CALL     NCSTF            ;TEST FREE
           JZ       NCSAD20          ;YES. ADD TO STACK
           CALL     NCSCKN           ;CHECK FOR NESTED ENTRY
           JNZ      NCSAD20          ;NO. ADD TO STACK
           CALL     NCSFRE           ;YES. FREE ENTRY AT DI
           JMP      NCSAD01          ;AND RET TO STACK
```

TABLE 15
Process compare fail stack V

```
575  NCSAD20    LABEL  NEAR
576             PUSH    SI                ;NCSR4
577             MOV     DI,NCSR1
578             INC     DI                ;NCSFP
579             INC     DI
580             MOV     SI,OFFSET G:NCSR2
581             CLD
582             MOVSW
583             POP     SI                ;NCSR4
584             MOV     [DI],SI           ;NCSBP(R1)=R4
585             PUSH    SI                ;NCSR4
586             MOV     DI,NCSR2
587             INC     DI                ;NCSBP(R2)
588             INC     DI
589             INC     DI
590             INC     DI
591             MOV     SI,OFFSET G:NCSR1       ;NCSBP(R2)=R1
592             MOVSW
593             POP     SI                      ;NCSR4
594             OR      SI,SI                   ;NEW ENT AT
                                                ;ST OF STACK?
595             JNZ     $+5                     ;NO
596             MOV     SI,OFFSET G:NCSPTR      ;Y. SET NXT PTR
                                                ;TO QHEAD
597             INC     SI                      ;NCSFP(R4)
598             INC     SI
599             MOV     DI,SI
600             MOV     SI,OFFSET G:NCSR1       ;UPD FWD PTR
                                                ;OF NEXT ENT/HEADER
601             MOVSW
602             RET
```

18

TABLE 16
List maintenance routines I

```
;
;     REMOVE FIRST ENTRY FROM STACK
;     RETURN ENTRY IN DI
;
NCSRMF    LABEL NEAR
          MOV     DI,NCSPTR+NCSFP        ;FIRST ENTRY
          MOV     SI,[DI+NCSFP]         ;SI IS NEW 1ST ENTRY
          XCHG    SI,DI                 ;SI IS ADDRESS OF
                                        ;REMOVED ENTRY
          MOV     NCSPTR+NCSFP,DI       ;UPDATE HEAD OF STACK
                                        ;POINTER
          OR      DI,DI                 ;TEST FOR ZERO: IS
                                        ;STACK EMPTY
          JNZ     $+5                   ;SKIP NEXT INSTRUCTION
                                        ;IF STACK NOT EMPTY
          MOV     DI,OFFSET G:NCSPTR    ;STACK IS EMPTY, POINT
                                        ;TO HEAD OF STACK
          INC     DI                    ;NBPTR
          INC     DI
          INC     DI
          INC     DI                    ;DI IS ADDRESS OF BACK
                                        ;POINTER (NCSBP)
          CALL    SZER2                 ;ZERO THE BACK POINTER
          XCHG    SI,DI                 ;DI=RMVD ENTRY ADDR
          PUSH    DI                    ;SAVE ADDRESS OF REMOVED
                                        ;ENTRY
          INC     DI
          INC     DI                    ;DI IS ADDRESS OF
                                        ;FORWARD/BACKWARD PTRS
          CALL    SZER4                 ;ZERO THE POINTERS IN
                                        ;REMOVED ENTRY
          POP     DI                    ;RESTORE ADDRESS OF
                                        ;REMOVED ENTRY
          RET                           ;RETURN TO CALLER
```

TABLE 17
List maintenance routines II

```
;
;     REMOVE LAST ENTRY FROM STACK
;     RETURN ENTRY IN DI
;
NCSRML    LABEL NEAR
          MOV     DI,NCSPTR+NCSBP       ;LAST ENTRY
          MOV     SI,[DI+NCSBP]
          XCHG    DI,SI
          MOV     NCSPTR+NCSBP,DI
          OR      DI,DI
          JNZ     $+5
          MOV     DI,OFFSET G:NCSPTR
          INC     DI                    ;NFPTR
          INC     DI
          CALL    SZER2
          XCHG    SI,DI                 ;DI=RMVD ENTRY ADDR
          PUSH    DI
          INC     DI
          CALL    SZER4
          POP     DI
          RET
```

### TABLE 18
### List maintenance routines III

```
;
;       FREE NON COMPARE STACK (NCS) ENTRY AT DI
;           (INCLUDING SAVE AND RESTORE WORKING REGISTERS)
NCSFRE:     PUSH        DI
            PUSH        CX
            XOR         AL,AL
            MOV         CX,LNCSENT
            CLD
            REP STOSB                       ;ZERO THE ENTIRE NON COMPARE
                                            ;STACK ENTRY
            POP         CX
            POP         DI
            RET
;
;       CHECK FOR NESTED STACK ENTRIES
;
NCSCKN:     PUSH        DI                  ;SAVE WORKING REGISTERS
            PUSH        SI
            PUSH        CX
            ADD         DI,NCSACNT          ;COMPARE NCS A COUNT AND
                                            ;B COUNT FOR EQUALITY
            ADD         SI,NCSACNT
            MOV         CX,2
            CLD
            REPZ CMPSW
            POP         CX                  ;RESTORE WORKING REGISTERS
            POP         SI
            POP         DI
            RET
```

### TABLE 19
### List maintenance routines IV

```
;
;       TEST FOR FREE (ZERO) NCS ENTRY AT DI
;
NCSTF:      PUSH        DI
            PUSH        CX
            XOR         AL,AL
            MOV         CX,LNCSENT
            CLD
            REPZ SCASB                      ;SCAN ENTIRE ENTRY FOR A
                                            ;NON-ZERO BYTE
            POP         CX
            POP         DI
            RET
SZER4:      XOR         AX,AX
            CLD
            STOSW                           ;STORE 4 BYTES OF ZEROS AT
            STOSW                           ;LOCATION ADDRESSED BY DI
            RET
SZER2:      XOR         AX,AX
            CLD
            STOSW                           ;STORE 2 BYTES OF ZEROS AT
                                            ;LOCATION ADDRESSED BY DI
            RET
```

Format option commands are read by HXMT and HRCV from an optional CMDIN file. This may be allocated to the terminal or any file a user sets up, which could contain frequently used command configurations. All commands start with the command-name. Operands, if any, follow.

The command TABS sets the tab positions. In its absence, default positions may be used. The same tab positions are used for both directions of data transmission. When using the TC command, HRCV uses tab positions sent from the terminal which were saved in the fname.HSH file when the file was originally transferred with the RC command. The operand of this command is zero to 15 column numbers, in ascending order, separated from each other and the TABS command name. If no operands are specified, this prevents any substitution of tabs for blanks on transmission from the host. This is not the case on transmission to the host. If tabs beyond the last tab position are received by the host, one blank is substituted unless the NXTAB command is operative.

The command NONUM may be specified when sending a file from the host. For RECFM F and V files, this has the effect of removing the eight-digit sequence number from the data before it is sent. For RECFM F, the last eight characters of each record are not sent. For RECVM V, the first eight characters are not sent. There is no effect for format U records. Use of this option speeds up file transmission, and may make the data easier to edit at the terminal. This option is not specified for files which do not have sequence numbers, since it could result in loss of data.

The command RENUM can be specified to HRCV to cause it to add new sequence numbers to a numberless RECFM F or V file being received from the terminal. When working with the TC command, RENUM is activated if and only if NONUM was active when the file was originally transferred to the terminal with an RC command. RENUM is not recommended if the file on the terminal already has sequence numbers. On RECFM F files the new numbers would overlay the old numbers; but on RECFM V files, the new numbers would be appended to the front of each line, resulting in two sets of numbers on each line.

The command NXTAB may be specified to HRCV when sending a file the host It prevents expansion of tabs to blanks. This option is used when the original host file contained the TAB character. NXTAB may also be specified to HXMT. It has no effect when used with the RF command, but sets the NXTAB switch in the fname.HSH file when used with RC. This sets the NXTAB option when HRCV is later used to receive changes from this same file.

The file transfer process is subject to many possible errors, most of which are recovered automatically. Most unrecoverable errors are due to host failure.

When receiving a file from the host, a checksum error may occur. This means that the checksum digit for a given line did not match the data. HXMT attempts to resend the line. If the error is recoverable, transmission proceeds. Any unrecoverable error causes an indefinite loop, which is terminated by the user causing the emulator to return to interactive mode. Then, the user causes a break to be sent to the host, and the HXMT application can be cancelled. This type of error is most often caused by trying to send and EBCDIC character which cannot be translated into ASCII. It can also be caused by trying to send a line longer than the VM LINESIZE, which causes VM to insert CRLF characters.

If an unrecoverable error not caused by ASCII-EBCDIC translation problems or line length occurs during TF, RF, or RC, recovery may be accomplished by repeating the command at a later time. However, if a TC command is abended, it is important to recover the base file on the host, which may have been partially overwritten, especially on sequential files. Before any alteration of the base file during a TC, HRCV may make a copy of the base file in a DATASAV file on DASD 26. If the base file has been damaged, it is important to recover by copying the DATASAV file back to the base file before reusing the DATASAV file by doing another TC.

The TC command is abended by the host if the file checksum of the current host base file does not match the file checksum computed at the last successful TC or RC for that file, indicating a base file mismatch. A base file mismatch is caused by use of the TF command or any direct updating of the host file at some time after the last successful TC or RC command for this file. For this reason, all updating of a host file being maintained through update mode must first be done by updating the terminal copy and then sending the changes to the host with the TC command. Once a file mismatch has occurred, three recovery procedures may be implemented, as follows:

1) Use the TF command followed by RC command. This procedure will lose any updates applied directly to the host file.

2) Use the RC command directly. This will lose any updates applied to the terminal file.

3) Use the TF command to create a new host file, saving the current host file. Use manual methods to merge the updates from both files into a common file which is then resent to the host with RC.

TABLE 20
Example of file update command sequence

```
F         (file checksum and formatting parameters)
C00002    (copy two lines: A and B)
D00001    (delete one line: C)
C'        (modified data line: C')
L         (new data line: L)
M         (new data line: M)
C00002    (copy two lines: D and E)
D00002    (delete two lines: F and G)
C00003    (copy three lines: H, I, and J)
D00001    (delete one line: K)
S         (request new file checksum)
F         (echo new file checksum back to host)
E         (end of transmission)
```

**Claims**

1. A method for operating a distributed data processing system including a microcomputer (30) having a data storage device (36) and a display (35), a host computer (20), and a communication link (28, 38) interconnecting the microcomputer (30) and the host computer, the method for updating a file comprising the steps of:

(a) transmitting a complete file (33) from said host to said microcomputer;

(b) storing the complete file (33) on said data storage device (36);

characterised by including the steps of:—

(c) creating and storing at said microcomputer an uneditable file (32) containing a hash total for each line in said complete file (33);

(d) modifying the complete file (33) stored at said microcomputer by selectively replacing, deleting, and adding lines at selected locations within the file to provide a modified file (33);

(e) calculating hash values for each line of the modified file for comparison with the hash values in the uneditable file (32) to identify the changed lines;

(f) generating a data stream of replaced and added lines and control information specifying the location of replaced, added, and deleted lines; and

(g) transmitting the data stream to said host computer (20) for updating the complete file (24 or 26) at said host.

2. A method as claimed in claim 1 wherein step (c) includes operating said processor unit means to calculate a line hash total for each data line in said base text file, and storing the line hash totals in a hash file in said storage means;

step (d) includes editing the base text file to selectively delete and modify data lines in said base text file and add data lines to said base text file to create an update text file;

step (e) includes operating said processor unit means to calculate a line hash total for each data line in said update text file and

(h) evaluating the line hash totals calculated with respect to said base text file and said update text file to identify selected deleted, modified and added data lines.

3. The method of claim 2 wherein said evaluating step (h) includes the steps of:

(i) associative comparing a base file line hash total calculated with respect to a data line from said base text file and an update file line hash total calculated with respect to a data line from said update text file;

(j) responsive to said line hash totals comparing equal, entering synchronous mode;

(k) sequentially repeating said associative comparing step and maintaining a count n of equal comparison since entering synchronous mode, until said line has totals compare unequal or until an end of file is encountered, and thereupon terminating synchronous mode; and

responsive to said count n, generating for said data stream control information identifying unchanged lines.

4. The method of claim 3 further comprising the steps of:

responsive to said line hash totals comparing unequal while in synchronous mode, entering search mode;

maintaining in a first stack base file line has totals selected for processing since entering search mode;

maintaining in a second stack update file line hash totals selected for processing since entering search mode;

sequentially processing selected base file line hash totals and update file line hash totals to identify data lines deleted from said base text file; and

generating for said data stream control information identifying deleted lines.

5. The method of claim 4 wherein said sequentially processing step further is executed to identify data lines modified or added to said base text file; and

selecting from said update text file for said data stream data lines identified as modified or added to said base text file.

6. The method of claim 5 wherein said sequentially processing step comprises the steps of:

comparing each base file line hash total selected for processing with the update file line hash totals in said second stack and comparing each update file line hash total selected for processing with the base file line hash totals in said first stack until a first pair of line hash totals are found which compare equal;

responsive to the finding of said first pair of line hash totals, sequentially comparing update file line hash totals with sequential base file line hash totals to determine the number of consecutive pairs of line hash totals which compare equal subsequent to and including said first pair, and responsive thereto

if only one consecutive pair of line hash totals compare equal, ignoring the compare equal of said first pair and continuing search mode;

if a first plurality, less than a predetermined count, of consecutive pairs of line hash totals compare equal, entering a compare count entry representing said first plurality into a compare-fail stack and continuing search mode; and

if a second plurality, equal to said predetermined count, of consecutive pairs of line hash totals compare equal, examining said compare-fail stack to identify a smallest entry having the smallest compare count which does not interfere with any of a nest of larger entries with larger compare counts, all of which larger entries do not interfere with said second plurality of consecutive pairs, and setting the end of each of said first and second stacks to the entries corresponding to said smallest entry, the entries remaining in said first stack representing lines to be deleted, and the entries in said second stack representing new or modified lines; and

clearing said first and second stacks and terminating search mode.

7. A method as claimed in claim 2 for operating a computing system including a host computer and a terminal computing apparatus comprising storage means for storing data signals and including a direct access storage device and a main storage device, the terminal computing apparatus further including a processor unit means, a user input/output means, and a communication means;

including operating said communication means to receive from said host computer a copy of a base text file including a plurality of data lines;

operating said communication means to transmit said data stream to said host computer; and

responsive to said data stream, modifying a host copy of said base text file to provide at the host a copy of said update text file.

8. The method of claim 7 comprising the further steps of

generating a file hash total at said host computer with respect to said base text file;

communicating said file hash total to said terminal computing apparatus; and

communicating to said host computer in said data stream said file hash total for comparison with a file hash total generated with respect to said base text file to assure synchronization between said base text file and said update text file.

9. A distributed data processing system including a microcomputer (30) having a data storage device (36) and a display (35), a host computer (20), and a communication link (28, 38) interconnecting the microcomputer and the host computer, said processing system comprising:

means (20, 28, 38) for transmitting a complete file (33) including a plurality of lines to be updated from said host to said microcomputer;

means (30) for storing the complete file (33) on said data storage device;

characterised by:

means (30) for creating and storing at said microcomputer an uneditable file containing a hash total for each line in said complete file;

means (30, 35, 34) for modifying the complete file stored at said microcomputer by selectively replacing, deleting, and adding lines at selected locations within the file to provide a modified file;

means (30, 34) for calculating hash values for each line of the modified file for comparison with the hash values in the uneditable file to identify the changed lines;

means (30) for generating a data stream of replaced and added lines and control information specifying the location of replaced, added, and deleted lines; and

means (30, 38, 28) for transmitting the data stream to said host computer (20) for updating the complete file (24, 26) at said host.

**Patentansprüche**

1. Verfahren zum Betreiben einer verteilten Datenverarbeitungsanlage mit einem Mikrocomputer (30), der eine Datenspeichereinrichtung (36) und eine Anzeigeeinrichtung (35) aufweist, einem Hostrechner (20) und einem Datenübermittlungsteil (28, 38), der den Mikrocomputer (30) und den Hostrechner verbindet, wobei das Verfahren zum Fortschreiben einer Datei die Schritte umfaßt:

(a) Übertragen einer vollständigen Datei (33) vom Host auf den Mikrocomputer,

(b) Speichern der vollständigen Datei (33) an der Datenspeichereinrichtung (36),

dadurch gekennzeichnet, daß es die Schritte einschließt:

EP 0 117 281 B1

(c) Erzeugen und Speichern am Mikrocomputer einer nicht redigierbaren Datei (32), die eine Zonenkontrollsumme für jede Datenzeile in der vollständigen Datei (33) enthält,

(d) Modifizieren der vollständigen Datei (33), die am Mikrocomputer gespeichert ist, indem wahlweise Zeilen an gewählten Stellen in der Datei ersetzt, gelöscht und addiert werden, um eine modifizierte Datei (33) zu liefern,

(e) Berechnen von Zonenkontrollsummen für jede Zeile der modifizierten Datei zum Vergleich mit den Zonenkontrollsummen in der nicht redigierbaren Datei (32), um die geänderten Zeilen zu identifizieren,

(f) Erzeugen eines Datenflusses der ersetzten und addierten Zeilen und einer Steuerinformation, die die Stelle der ersetzten, addierten und gelöschten Zeilen angibt, und

(g) Übertragen des Datenflusses auf den Hostrechner (20) zum Fortschreiben der vollständigen Datei (24 oder 26) am Host.

2. Verfahren nach Anspruch 1, bei dem der Schritt (c) das Betreiben der Prozessoreinheit zum Berechnen einer Zeilenzonenkontrollsumme für jede Datenzeile in der Basistextdatei und das Speichern der Zeilenzonenkontrollsummen in einer Zonenkontrollsummendatei in der Speichereinrichtung einschließt,

der Schritt (d) das Redigieren der Basistextdatei zum wahlweisen Löschen und Modifizieren von Datenzeilen in der Basistextdatei und zum Addieren von Datenzeilen zur Basistextdatei, um dadurch eine fortgeschriebene Textdatei zu erzeugen, einschließt,

der Schritt (e) das Betreiben der Prozessoreinheit zum Berechnen einer Zeilenzonenkontrollsumme für jede Datenzeile in der fortgeschriebenen Textdatei einschließt und

(h) die Zeilenkontrollsummen, die bezüglich der Basistextdatei und der fortgeschriebenen Textdatei berechnet sind, bewertet werden, um die gewählten gelöschten, modifizierten und addierten Datenzeilen zu identifizieren.

3. Verfahren nach Anspruch 2, dadurch gekennzeichnet, daß der Bewertungsschritt (h) die Schritte einschließt:

(i) assoziatives Vergleichen einer Zeilenzonenkontrollsumme der Basisdatei, die Bezüglich einer Datenzeile der Basistextdatei berechnet ist, und einer Zeilenzonenkontrollsumme der fortgeschriebenen Datei, die bezüglich einer Datenzeile der fortgeschriebenen Textdatei berechnet ist,

(j) auf ein Vergleichsergebnis ansprechend, daß die Zeilenzonenkontrollsummen gleich sind, Eintreten in den Synchronbetrieb,

(k) der Reihe nach erfolgendes Wiederholen des assoziativen Vergleichsschrittes und Beibehalten eines Zählwertes n, der eine Gleichheit ergebenen Vergleiche seit dem Eintritt in den Synchronbetrieb bis der Vergleich der Zeilenzonenkontrollsummen eine Ungleichheit ergibt oder bis das Dateiende erreicht wird und daraufhin erfolgendes Beenden des Synchronbetriebes und

auf den Zählwerte n ansprechendes Erzeugen einer Steuerinformation dür den Datenstrom, die die unveränderten Zeilen identifiziert.

4. Verfahren nach Anspruch 3, welches weiterhin die Schritte umfaßt:

auf ein Vergleichsergebnis, daß die Zeilenzonenkontrollsummen während des Synchronbetriebes ungleich sind, ansprechendes Eintreten in den Suchlaufbetrieb,

Halten in einem ersten Stapelspeicher der Zeilenzonenkontrollsummen der Basisdatei, die zur Verarbeitung gewählt wurden, seit in den Suchlaufbetrieb eingetreten wurde,

Halten in einem zweiten Stapelspeicher der Zeilenzonenkontrollsummen der fortgeschriebenen Datei, die zur Verarbeitung gewählt wurden, seit in den Suchlaufbetrieb eingetreten wurde,

sequentielles Verarbeiten der gewählten Zeilenzonenkontrollsummen der Basisdatei und der fortgeschriebenen Datei, um die Datenzeilen zu identifizieren, die von der Basistextdatei gelöscht sind, und

Erzeugen einer Steuerinformation für den Datenfluß, die die gelöschten Zeilen identifiziert.

5. Verfahren nach Anspruch 4, bei dem der sequentielle Verarbeitungsschritt weiterhin ausgeführt wird, um Datenzeilen zu identifizieren, die modifiziert oder der Basistextdatei zuaddiert sind,

und von der fortgeschriebenen Textdatei Datenzeilen für den Datenfluß gewählt werden, die als modifiziert oder zur Basistextdatei addiert identifiziert sind.

6. Verfahren nach Anspruch 5, dadurch gekennzeichnet, daß der sequientielle Verarbeitungsschritt die Schritte umfaßt:

Vergleichen jeder zur Verarbeitung gewählten Zeilenzonenkontrollsumme der Basisdatei mit den Zeilenzonenkontrollsummen der fortgeschriebenen Datei im zweiten Stapelspeicher und Vergleichen jeder zur Verarbeitung gewählten Zeilenkontrollsumme der fortgeschriebenen Datei mit den Zeilenkontrollsummen der Basisdatei im ersten Stapelspeicher, bis ein erstes Paar von Zonenkontrollsummen gefunden wird, die gleich sind,

auf das Auffinden des ersten Paares von Zeilenkontrollsummen ansprechendes und sequentielles Vergleichen der Zeilenzonenkontrollsummen der fortgeschriebenen Datei mit sequentiellen Zeilenkontrollsummen der Basisdatei, um die Anzahl der aufeinanderfolgenden Paare von Zeilenkontrollsummen, die gleich sind, anschließend an das erste Paar und einschließlich des ersten Paares zu bestimmen, und darauf ansprechend erfolgendes

Ignorieren de Gleichheit des ersten Paares und Fortsetzen des Suchlaufbetriebes, wenn nur ein folgendes Paar von Zeilenkontrollsummen gleich ist,

EP 0 117 281 B1

dann, wenn eine erste Anzahl kleiner als ein bestimmter Zählwert von aufeinanderfolgenden Paaren von Zeilenkontrollsummen gleich ist, Eingeben eines Vergleichszahleintrags, der die erste Anzahl wiedergibt, in einen Vergleichsausfallstapelspeicher und Fortsetzen des Suchlaufbetriebes

und dann, wenn eine zweite Anzahl gleich dem bestimmten Zählwert von aufeinanderfolgenden Paaren von Zeilenzonenkontrollsummen gleich ist, Überprüfen des Vergleichsausfallstapelspeichers, um einen kleinsten Eintrag mit dem kleinsten Vergleichswert zu identifizieren, der keinen Eintrag einer Schachtel von größeren Einträgen mit größeren Vergleichswerten stört, wobei alle diese größeren Einträge die zweite Anzahl von aufeinanderfolgenden Paaren nicht stören und Setzen des Endes des ersten und des zweiten Stapelspeichers auf die Einträge, die dem kleinsten Eintrag entsprechen, wobei die Einträge, die im ersten Stapelspeicher bleiben, die zu löschenden Zeilen wiedergeben und die Einträge, die im zweiten Stapelspeicher bleiben, die neuen oder modifizierten Zeilen wiedergeben, und

Löschen der ersten und zweiten Stapelspeichers und Beenden des Suchlaufbetriebes.

7. Verfahren nach Anspruch 2, zum Betreiben einer Computeranlage mit einem Hostrechner und einem Stationsrechner, der eine Speichereinrichtung zum Speichern von Datensignalen umfaßt, die eine Speichereinrichtung mit direktem Zugriff und eine Hauptspeichereinrichtung aufweist, wobei der Stationsrechner weiterhin eine Prozessoreinheit, eine Anwender-Eingabe/Ausgabe-Einrichtung und eine Übermittlungseinrichtung aufweist,

welches Verfahren das Betreiben der Übermittlungseinrichtung zum Empfangen einer Kopie einer Basistextdatei einschließlich einer Vielzahl von Datenzeilen vom Hostrechner,

das Betreiben der Übermittlungseinrichtung zum Übertragen des Datenflusses auf den Hostrechner und das auf den Datenfluß ansprechend erfolgendes Modifizieren einer Hostkopie der Basistextdatei einschließt, um am Host eine Kopie der fortgeschriebenen Textdatei zu liefern.

8. Verfahren nach Anspruch 7, welches die weiteren Schritte umfaßt:
Erzeugen einer Dateizonenkontrollsumme am Hostrechner bezüglich der Basistextdatei,
Übermitteln der Dateizonenkontrollsumme zum Stationsrechner, und
Übermitteln zum Hostrechner die Dateizonenkontrollsumme im Datenfluß zum Vergleich mit einer Dateizonenkontrollsumme, die bezüglich der Basistextdatei erzeugt ist, um eine Synchronisation zwischen der Basistextdatei und der fortgeschriebenen Textdatei sicherzustellen.

9. Verteilte Datenverarbeitungsanlage mit einem Mikrocomputer (30), der eine Datenspeichereinrichtung (36) und eine Anzeige (35) aufweist, einem Hostrechner (20) und einem Datenübermittlungsteil (28, 38), der den Mikrocomputer und den Hostrechner verbindet,

welche Datenverarbeitungsanlage eine Einrichtung (20, 28, 38) zum Übertragen einer fortzuschreibenden vollständigen Datei (33) mit einer Vielzahl von Zeilen vom Host auf den Mikrocomputer,

und eine Einrichtung (30) zum Speichern der vollständigen Datei (33) an der Datenspeichereinrichtung umfaßt, gekennzeichnet durch

eine Einrichtung (30) zum Erzeugen und Speichern am Mikrocomputer einer nicht redigierbaren Datei, die eine Zonenkontrollsumme für jede Zeile in der vollständigen Datei enthält,

eine Einrichtung (30, 35, 34) zum Modifizieren der vollständigen Datei, die am Mikrocomputer gespeichert ist, indem wahlweise an gewählten Stellen in der Datei Zeilen ersetzt, gelöscht und addiert werden, um eine modifizierte Datei zu liefern,

eine Einrichtung (30, 34) zum Berechnen von Zonenkontrollsummen für jede Zeile der modifizierten Datei zum Vergleich mit den Zonenkontrollsummen in der nicht redigierbaren Datei, um die geänderten Zeilen zu identifizieren,

eine Einrichtung (30) zum Erzeugen eines Datenflusses aus ersetzten und addierten Zeilen und einer Steuerinformation, die die Stellen der ersetzten, addierten und gelöschten Zeilen angibt, und

eine Einrichtung (30, 38, 28) zum Übertragen des Datenflusses auf den Hostrechner (20), um die vollständige Datei (24, 26) am Host fortzuschreiben.

**Revendications**

1. Procédé de commande d'un système de traitement de données distribué comprenant un microcalculateur (30) avec un dispositif de mémorisation de données (36) et un affichage (35), un ordinateur principal (20) et une liaison de communications (28, 38) interconnectant le microcalculateur (30) et l'ordinateur principal, le procédé de mise à jour d'un fichier comprenant les phases de:
a) transmission d'un fichier complet (33) dudit ordinateur principal vers ledit microcalculateur;
b) mémorisation du fichier complet (33) sur ledit dispositif de mémorisation de données (36);
caractérisé en ce qu'il comporte les phases de:
c) création et mémorisation audit microcalculateur d'un fichier non modifiable (32) contenant un total de contrôle pour chaque ligne dans ledit fichier complet (33);
d) modification du fichier complet (33) mémorisé audit microcalculateur en remplaçant sélectivement, en effaçant et en additionnant des lignes dans des positions sélectionnées dans le fichier pour produire un fichier modifié (33);
e) calcul de valeurs de contrôle pour chaque ligne du fichier modifié pour une comparaison avec les valeurs de contrôle du fichier non modifiable (32) afin d'identifier les lignes modifiées;

25

f) production d'un flux de données de lignes remplacées et ajoutées et d'informations de commande spécifiant la position des lignes remplacées, ajoutées et effacées; et

g) transmission du flux de données vers ledit ordinateur principal (20) pour mettre à jour le fichier complet (24 ou 26) audit ordinateur principal.

2. Procédé selon la revendication 1, dans lequel la phase (c) consiste à commander lesdits moyens d'unité de processeur pour calculer un total de contrôle de ligne pour chaque ligne de données dans ledit fichier de texte de base et mémorisation des totaux de contrôle de ligne dans un fichier de totaux dans lesdits moyens de mémorisation;

la phase (d) comporte la modification du fichier de texte de base pour effacer et modifier sélectivement des lignes de données dans ledit fichier de texte de base et ajouter des lignes de données audit fichier de texte de base afin de créer un fichier de texte mis à jour;

la phase (e) consiste à commander lesdits moyens d'unité de processeur pour calculer un total de contrôle de ligne pour chaque ligne de données dans ledit fichier de texte mis à jour et

h) évaluation des totaux de contrôle de ligne calculés par rapport audit fichier de texte de base et audit fichier de texte mis à jour pour identifier des lignes de données sélectionnées, effacées, modifiées et ajoutées.

3. Procédé selon la revendication 2, dans lequel ladite phase d'évaluation (h) comporte les phases de:

i) comparaison associative d'un total de contrôle de ligne de fichier de base calculé par rapport à une ligne donnés dudit fichier de texte de base et d'un total de contrôle de ligne de fichier mis à jour calculé par rapport à une ligne de données dudit fichier de texte mis à jour;

j) en fonction desdits totaux de contrôle de ligne apparaisant égaux, introduction d'un mode synchrone;

k) répétition séquentielle de ladite phase de comparaison associative et maintien d'un comptage n de comparaisons égales depuis l'introduction du mode synchrone jusqu'à ce que lesdits totaux de contrôle de ligne apparaissent inégaux ou jusqu'à ce qu'une fin de fichier soit rencontrée et terminaison ensuite dudit mode synchrone; et

en fonction dudit comptage n, pour ledit flux de données d'informations de contrôle identifiant des lignes inchangées.

4. Procédé selon la revendication 3, comprtant en outre les phases de:

en fonction desdits totaux de contrôle de ligne apparaissant inégaux pendant le mode synchrone, introduction du mode de recherche;

maintien dans un premier fichier de base de pile des totaux de contrôle de ligne sélectionnés pour le traitement depuis l'introduction du mode de recherche;

maintien dans un second fichier mis à jour de pile des totaux de contrôle de ligne sélectionnés pour le traitement depuis l'introduction d'un mode de recherche;

traitement séquentiel de totaux de contrôle de ligne de fichier de base sélectionnés et de totaux de contrôle de ligne de fichier mis à jour pour identifier des lignes de données effacées dans ledit fichier de texte de base; et

production pour ledit flux de données d'informations de contrôle identifiant des lignes effacées.

5. Procédé selon la revendication 4, dans lequel ladite phase de traitement séquentiel est exécutée en outre pour identifier des lignes de données modifiées ou ajoutées audit fichier de texte de base; et

sélection dans ledit fichier de texte mis à jour desdites lignes de données de flux de données identifiées comme modifiées ou ajoutées audit fichier de texte de base.

6. Procédé selon la revendication 5, dans lequel ladite phase de traitement séquentiel consiste en des phases de:

comparaison de chaque total de contrôle de ligne de fichier de base sélectionné pour le traitement avec les totaux de contrôle de ligne de fichier mis à jour dans ladite seconde pile et de comparaison de chaque total de contrôle de ligne de fichier mis à jour sélectionné pour le traitement avec les totaux de contrôle de ligne de fichier de base dans ladite première pile avant qu'une première paire de totaux de contrôle de ligne ont été trouvés qui s'avèrent égaux;

en réponse à l'apparition de ladite première paire de totaux de contrôle de ligne, de comparaison séquentielle de totaux de contrôle de ligne de fichier mis à jour avec des totaux de contrôle de ligne de fichier de base séquentiels pour déterminer le nombre de paires consécutives de totaux de contrôle de ligne qui s'avèrent égaux après y compris ladite première paire, et en réponse,

si une seule paire consécutive de totaux de contrôle de ligne s'avère égale, négligence de la comparaison égale de ladite première paire et poursuite du mode de recherche;

si une première quantité, inférieure à un comptage prédéterminé, de paires consécutives de totaux de contrôle de ligne s'avèrent égales, introduction d'une entrée de comptage de comparaison représentant ledit premier nombre dans une pile de manque de comparaison et poursuite du mode de recherche; et

si un second nombre, égal audit comptage prédéterminé de paires consécutives de totaux de contrôle de ligne s'avèrent égales, d'examen de ladite pile de manque de comparaison pour identifier une plus petite entrée ayant le plus petit comptage de comparaison qui n'interfère pas avec un logement de plus grandes entrées avec des plus grands comptages de comparaison, toutes lesdites entrées plus larges n'interférant pas avec ledit second nombre de paires consécutives et de mise en place de l'extrémité de chacune de ladite première et ladite seconde piles aux entrées correspondant à ladite entrée la plus petite,

26

les entrées qui restent dans ladite première pile représentant des lignes à supprimer et les entrées dans ladite seconde pile représentant des nouvelles lignes ou modifiées; et

libération de ladite première et ladite seconde piles et terminaison du mode de recherche.

7. Procédé selon la revendication 2, pour commander un système de calcul comprenant un ordinateur principal et un appareil de calcul terminal comprenant un dispositif de mémorisation pour mémoriser les signaux de données et comprenant un dispositif de mémorisation à accès direct et un dispositif de mémorisation principal, l'appareil de calcul terminal comportant en outre des moyens d'unité de processeur, des moyens d'entrée/sortie d'utilisateur et des moyens de communication;

comprenant la commande desdits moyens de communication pour recevoir, dudit ordinateur principal, une copie d'un fichier de texte de base contenant plusieurs lignes de données;

de commande desdits moyens de communication pour transmettre ledit flux de données audit ordinateur principal; et

en fonction dudit flux de données, de modification d'une copie d'ordinateur principal dudit fichier de texte de base pour fournir à l'ordinateur principal une copie dudit fichier de texte mis à jour.

8. Procédé selon la revendication 7, comprenant en outre les phase de

production d'un total de contrôle de fichier audit ordinateur principal par rapport audit fichier de texte de base;

communication dudit total de contrôle de fichier audit appareil de calcul terminal; et

communication vers ledit ordinateur principal dans ledit flux de données dudit total de contrôle de fichier pour sa comparaison avec un total de contrôle de fichier produit par rapport audit fichier de texte de base pour assurer la synchronisation entre ledit fichier de texte de base et ledit fichier de texte mis à jour.

9. Système de traitement de données distribué comprenant un microcalculateur (30) avec un dispositif de mémorisation de données (36) et un affichage (35), un ordinateur principal (20) et une liaison de communication (28, 38) interconnectant le microcalculateur et l'ordinateur principal, ledit système de traitement comportant:

des moyens (20, 28, 38) pour transmettre un fichier complet (33) comprenant plusieurs lignes à mettre à jour, dudit ordinateur principal vers ledit microcalculateur;

des moyens (30) pour mémoriser le fichier complet (33) sur ledit dispositif de mémorisation de données;

caractérisé par:

des moyens (30) pour créer et mémoriser audit microcalculateur un fichier ne pouvant être modifié contenant un total de contrôle pour chaque ligne dans ledit fichier complet;

des moyens (30, 35, 34) pour modifier le fichier complet mémorisé audit microcalculateur en remplaçant, effaçant et additionnant sélectivement des lignes des positions sélectionnées dans le fichier pour obtenir un fichier modifié;

des moyens (30, 34) pour calculer des valeurs de contrôle pour chaque ligne du fichier modifié pour leur comparaison avec les valeurs de contrôle dans le fichier ne pouvant être modifié pour identifier les lignes modifiées;

des moyens (30) pour produire un flux de données de lignes remplacées et ajoutées et des informations de commande spécifiant la position des lignes remplacées, ajoutées et supprimées; et

des moyens (30, 38, 28) pour transmettre le flux de données vers ledit ordinateur principal (20) afin de mettre à jour le fichier complet (24, 26) audit ordinateur principal.

FIG.1

FIG.2

FIG.7

FILE TRANSMISSION
HOST TO PC

DATA LINES 50          CONTROL LINES 60

FIG.3

CLEAR TEXT FILE 33 ON PC DISKETTE

71  72          74          75  76          78                      79

| FILE NAME | FILE LEN | | DATA LINE 1 | | CR | LF | | DATA LINE 2 | | EOF |

DIRECTORY 70

## FIG.4

HASH FILE 32 ON PC DISKETTE

81  82      84          85          86      87              88          89

| FILE NAME | N | | CHK SUM | FORMAT PARMS | | HASH LINE 1 | HASH LINE 2 | | HASH LINE N-1 | HASH LINE N |

DIRECTORY 70

## FIG.5

TEXT STREAM PC TO HOST

DATA LINE 90

92                  94                      96

| SEQ CHAR | ONE LINE ASCII DATA WITH TABS | LINE CHECK SUM |

COMMAND LINE 100

102             104                 106             108

| SEQ CHAR | COMMAND VERB CHAR | OPERAND | LINE CHECK SUM |

## FIG.6